# EUROPEAN PATENT APPLICATION

(11) **EP 3 388 298 A1**
(43) Date of publication of application: **17.10.2018**
(21) Application number: 18165663.8
(22) Date of filing: 04.04.2018
(51) Int. Cl.: B60T 7/12, B60T 8/172

(54) **AUTOMATED VEHICLE OPEN-LOOP BRAKE CONTROL SYSTEM**

(30) Priority: 11.04.2017 US 201715484699
(71) Applicant: Delphi Technologies LLC, Troy, MI 48007 (US)
(72) Inventor: BHATIA, Gaurav, PITTSBURGH, PENNSYLVANIA 15208 (US); WEI, Junqing, BRIDGEVILLE, PENNSYLVANIA 15017 (US); SUN, Ludong, PITTSBURGH, PENNSYLVANIA 15217 (US); OZBILGIN, Guchan, PITTSBURGH, PENNSYLVANIA 15206 (US)
(74) Representative: Conroy, John

(57) **Abstract**

An open-loop brake control system (10) for an automated vehicle includes a brake-unit (26) and a controller (32). The brake-unit (26) varies brake-pressure (28) to operate brakes (30) of a host-vehicle (12). The controller (32) is in communication with the brake-unit (26). The controller (32) operates the brake-unit (26) to an initial-pressure (34) to initiate braking of the host-vehicle (12) in accordance with a brake-model (36) that characterizes vehicle-deceleration (38) versus the initial-pressure (34) based on a time-of-operation (40) of the brakes (30).

## Description

### TECHNICAL FIELD OF INVENTION

This disclosure generally relates to a brake control system, and more particularly relates to a system that operates a brake-unit to an initial-pressure to initiate braking of a host-vehicle in accordance with a brake-model that characterizes vehicle-deceleration versus the initial-pressure based on a time-of-operation of the brakes.

### BACKGROUND OF INVENTION

It has been observed that the braking-force or vehicle-deceleration response of a vehicle brake system varies for a particular value of brake-pressure, i.e. the hydraulic fluid pressure in the brake system. That is, for a given brake-pressure, the degree to which the vehicle decelerates varies. For example, it has been observed that in some instances warmed-up brakes stop faster than cold brakes, and over-heated brakes stop slower than warmed-up brakes. For automated-vehicles, this inconsistency may cause an undesirable fluctuation in deceleration that occupants of the automated-vehicle may find annoying.

### SUMMARY OF THE INVENTION

Described herein is a brake system that compensates or adjusts the initial open-loop brake pressure control based time-of-operation of the brakes. That is, the recommended initial-pressure is characterized for temperature effects on brake pressure vs. brake-temperature.

The time-of-operation of the brakes may be used to estimate a brake-temperature. The brake-model may be used to estimate a braking-distance of the host-vehicle.

In accordance with one embodiment, an open-loop brake control system for an automated vehicle is provided. The system includes a brake-unit and a controller. The brake-unit varies brake-pressure to operate brakes of a host-vehicle. The controller is in communication with the brake-unit. The controller operates the brake-unit to an initial-pressure to initiate braking of the host-vehicle in accordance with a brake-model that characterizes vehicle-deceleration versus the initial-pressure based on a time-of-operation of the brakes.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is diagram of a brake control system in accordance with one embodiment; and
Fig. 2 is an illustration of a host-vehicle equipped with the system of Fig. 1 traveling on a roadway in accordance with one embodiment.

### DETAILED DESCRIPTION

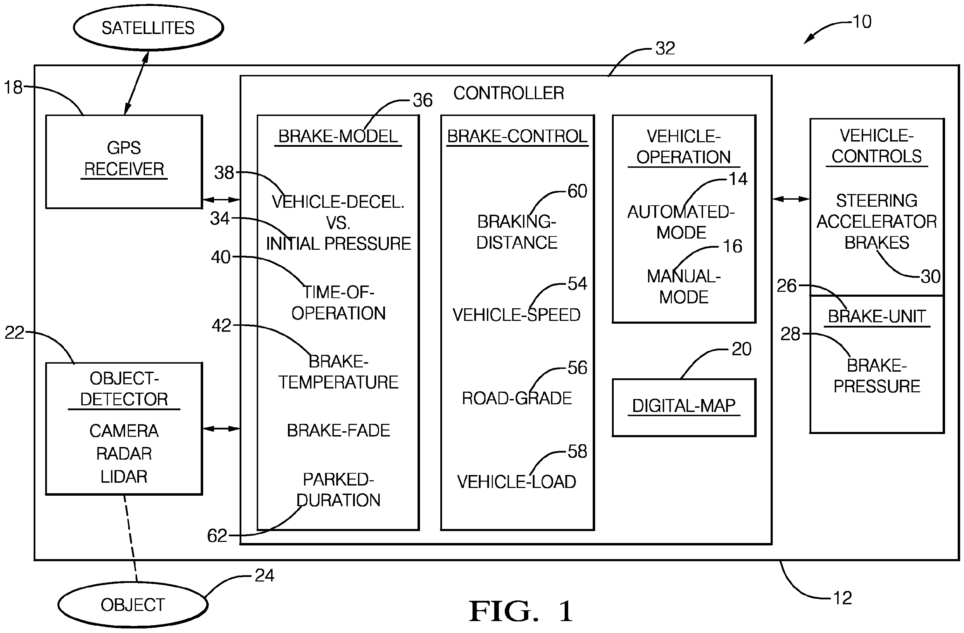

Fig. 1 illustrates a non-limiting example of an open-loop brake control system 10, hereafter referred to as the system 10. In general, the system 10 is suitable for use by an automated vehicle, a host-vehicle 12 for example. As used herein, the term automated vehicle may apply to instances when the host-vehicle 12 is being operated in an automated-mode 14, i.e. a fully autonomous mode, where a human-operator (not shown) of the host-vehicle 12 may do little more than designate a destination in order to operate the host-vehicle 12. However, full automation is not a requirement. It is contemplated that the teachings presented herein are useful when the host-vehicle 12 is operated in a manual-mode 16 where the degree or level of automation may be to automatically operate the brakes to avoid a collision and/or control forward motion of the host-vehicle 12 during a traffic-jam where bumper-to-bumper traffic is present.

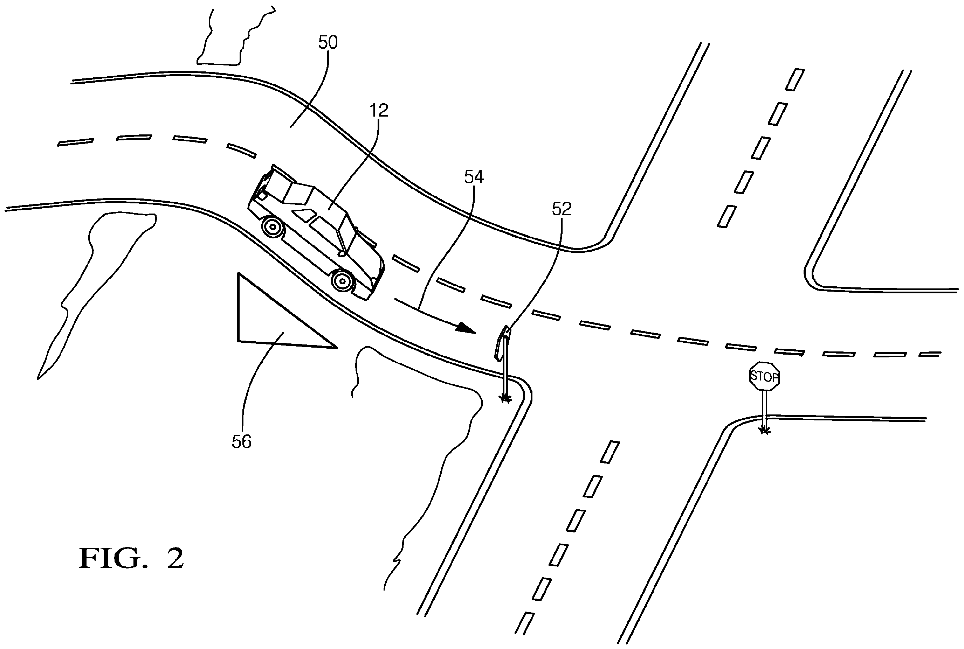

As will be recognized by those in the art, the system 10 may include a global-positioning-system receiver (GPS receiver 18) that receives signals from satellites to determine a location of the host-vehicle 12 on a digital-map 20. The system 10 may also include an object-detector 22 that may include, but is not limited to, one or any combination of a camera, radar, and/or lidar used to detect an object 24 such as another-vehicle or a stop-sign 52 (Fig. 2) proximate to the host-vehicle 12.

The system 10 includes a brake-unit 26 that varies brake-pressure 28, e.g. varies the hydraulic fluid-pressure applied to the brakes 30 if the brakes 30 are the hydraulic type, to operate the brakes 30 of a host-vehicle 12. Alternatively, or in addition to the hydraulics, the brake-unit 26 may include an electric-motor (not shown) that is used to generate the brake-pressure 28, as will be recognized by those in the art familiar with automatic braking. The brake-unit 26 may also include an anti-lock-braking feature that modulates the brake-pressure 28 when skidding or lock-up of one or more wheels of the host-vehicle 12 is detected.

The system 10 includes a controller 32 in communication with the brake-unit 26. The communication may be by way of wires, optical-fiber, or wireless communications as will be recognized by those in the art. The controller 32 may include a processor (not specifically shown) such as a microprocessor or other control circuitry such as analog and/or digital control circuitry including an application specific integrated circuit (ASIC) for processing data as should be evident to those in the art. The controller 32 may include memory (not specifically shown), including non-volatile memory, such as electrically erasable programmable read-only memory (EEPROM) for storing one or more routines, thresholds, and captured data. The one or more routines may be executed by the processor to perform steps for operating the brake-unit 26 based on signals received by the controller 32 from the GPS receiver 18 and/or the object-detector 22 as described herein.

The controller 32 is generally configured or programmed to operate the brake-unit 26 to an initial-pressure 34 to initiate braking of the host-vehicle 12. The initial-pressure 34 is selected or determined in accordance with a brake-model 36. It is noted that what value is selected as the initial-pressure 34 is commonly considered to be an open-loop selection because the selection is made without the benefit of a feed-back signal such as the vehicle-deceleration 38. Soon after the braking of the host-vehicle 12 begins, then the vehicle-deceleration 38 can be used to adjust the brake-pressure 28. However, it is preferable to avoid substantial changes (increases or decreases) in the brake-pressure 28 soon after braking begins as a substantial change in the brake-pressure 28 will likely be perceived by an occupant of the host-vehicle 12 and be an annoyance or cause discomfort to the occupant.

The brake-model 36 includes a characterization or mathematical model of the vehicle-deceleration 38 versus the initial-pressure 34. The characterization may initially be a predetermined or preset characterization based on observation of multiple vehicles during development testing. That initial characterization may be updated as the host-vehicle 12 is operated so that the characterization is custom-tuned specifically for the host-vehicle 12. This self-calibration or self-tuning helps to minimize the need for occupant detectable changes (increases or decreases) in the brake-pressure 28 soon after braking begins.

As noted above, it has been observed that in some instances warmed-up brakes stop faster than cold brakes, and over-heated brakes stop slower than warmed-up brakes. Advantageously, the characterization of the vehicle-deceleration 38 versus the initial-pressure 34 includes compensation based on a time-of-operation 40 of the brakes 30. As used herein, the time-of-operation 40 measure of how much or often the brakes 30 have been used since the host-vehicle 12 was started or use of the host-vehicle 12 was initiated. For example, if the host-vehicle 12 is parked over-night, it has been observed that the vehicle-deceleration 38 is decreased for a given value of the initial-pressure 34 when the brakes 30 are first used in the morning. However, after a short distance (e.g. 5km) and a few operations of the brakes to slow the host-vehicle 12, the brakes 30 warm-up and the vehicle-deceleration 38 is increased for a given value of the initial-pressure 34 when compared to when first time that day the brakes 30 were used.

Fig. 2 illustrates a non-limiting example of the host-vehicle 12 traveling down-hill section of a roadway 50 and approaching a stop-sign 52. As will be recognized by most, if the down-hill section of the roadway 50 was relatively long, more than five kilometers (5km) for example, and the road-grade is relatively steep, more than eight percent (8%) for example, frequent use of the brakes 30 to maintain a safe and/or legal value of the vehicle-speed 54 may increase the brake-temperature 42 excessively and lead to brake-fade. It is contemplated that the time-of-operation 40, optionally in combination with a profile of the brake-pressure 28 during the time-of-operation 40, may be used to estimate the brake-temperature 42 of the brakes 30. Knowledge of the brake-temperature 42 may be useful to make appropriate adjustments to the vehicle-deceleration 38 vs. initial-pressure 34 characteristic or profile.

Returning now to Fig. 1, It is contemplated that the system 10 may include the means to determine or receive an indication of the vehicle-speed 54, the road-grade 56, a vehicle-load 58, and other information useful to determine or estimate a braking-distance 60 of the host-vehicle 12. The road-grade 56 may be indicated by an inclinometer installed on the host-vehicle 12, or be indicated by the digital-map 20. The vehicle-load 58 may be indicated by height-sensors (not shown) coupled to suspension components of the host-vehicle 12. The determination or estimation of the braking-distance 60 may also consider historical use information from the brake-model 36 that measured the response of the brakes 30 in previous uses.

It has been observed that after the host-vehicle 12 has been parked for a long period of time, a week for example, the brakes 30 may be very sensitive, i.e. grabby, when first used. Accordingly, the system 10 may be configured or programmed to determine a parked-duration 62 so that the initial-pressure 34 can be adjusted to prevent excessive amounts of vehicle-deceleration 38 when the brakes 30 are first used when the parked-duration 62 is relatively long. It is also contemplated that the system 10 may be configured to momentarily operate the brakes 30 with a very low value of the brake-pressure 28 when use of the host-vehicle 12 is initiated for several reasons such as, but not limited to, check the function of the brakes, polish the friction-surfaces of the brakes 30 to prevent the aforementioned high sensitivity when the value of the parked-duration 62 is large, or just warm-up the brakes 30 to avoid an unexpectedly low value of the vehicle-deceleration 38 in response to some selected value of the initial-pressure 34. That is, the system may lightly 'ride' the brakes for a short distance, e.g. 0.1 km, to prepare the brakes for regular use to stop the host-vehicle 12.

The system 10 may also be programmed or configured to determine when the brakes 30 need to be serviced, e.g. when the brake-pads need to be replaced. One indication of the need to service the brakes 30 is when brake-model 36 indicates that the initial-pressure 34 for a common situation (e.g. level roadway, the vehicle-speed between 35kph and 40kph) is greater than an initial-threshold (not shown). That is, if the initial-pressure 34 output by the brake-model 36 is excessive, and other factors of the system 10 such as the brake-temperature 42 are nominal, that may be an indication that the brakes 30 need to be serviced. Alternatively or additionally, the time-of-operation 40 in combination with a profile of the brake-pressure 28 during the time-of-operation 40 may be used to estimate brake-pad wear.

Accordingly, an open-loop brake control system (the system 10), a controller 32 for the system 10, and a method of operating the system 10 is provided. The system 10 described herein is an improvement over prior automated braking systems because the system 10 includes the brake-model 36 that determines or maintains a history of the vehicle-deceleration 38 vs. the initial-pressure 34 of the brakes 30 so that unexpected adjustments to the brake-pressure 28 immediately or shortly after braking is initiated can be avoided. That is, because the vehicle-deceleration 38 vs. the initial-pressure 34 characteristic is tracked, the response of the brakes 30 can be confidently predicted, so the deceleration of the host-vehicle 12 experienced by an occupant or passenger of the host-vehicle 12 is smooth and not annoying to the passenger.

While this invention has been described in terms of the preferred embodiments thereof, it is not intended to be so limited, but rather only to the extent set forth in the claims that follow.

## Claims

1. An open-loop brake control system (10) for an automated vehicle, said system (10) comprising:
a brake-unit (26) that varies brake-pressure (28) to operate brakes (30) of a host-vehicle (12);
a controller (32) in communication with the brake-unit (26), wherein the controller (32) operates the brake-unit (26) to an initial-pressure (34) to initiate braking of the host-vehicle (12) in accordance with a brake-model (36) that characterizes vehicle-deceleration (38) versus the initial-pressure (34) based on a time-of-operation (40) of the brakes (30).

2. The system (10) in accordance with claim 1, wherein the time-of-operation (40) of the brakes (30) is used to estimate a brake-temperature (42).

3. The system (10) according to any one of the preceding claims, wherein the brake-model (36) is used to estimate a braking-distance (60) of the host-vehicle (12).
